# EUROPEAN PATENT APPLICATION

(11) **EP 4 080 165 A1**
(43) Date of publication of application: **26.10.2022**
(21) Application number: 20906855.0
(22) Date of filing: 16.10.2020
(51) Int. Cl.: G01C 21/24

(54) **MOON NAVIGATION SYSTEM BASED ON EARTH GNSS AND MOON NAVIGATION ENHANCEMENT SATELLITE**

(30) Priority: 26.12.2019 CN 201911368874
(71) Applicant: Xi'an Institute Of Space Radio Technology, Xi'an, Shaanxi 710199 (CN)
(72) Inventor: MENG, Yansong, Base Xi'an, Shaanxi 710199 (CN); ZHANG, Zhongying, Base Xi'an, Shaanxi 710199 (CN); TONG, Zhao, Base Xi'an, Shaanxi 710199 (CN); ZHANG, Peng, Base Xi'an, Shaanxi 710199 (CN); WANG, Dengfeng, Base Xi'an, Shaanxi 710199 (CN); BIAN, Lang, Base Xi'an, Shaanxi 710199 (CN); WANG, Yanguang, Base Xi'an, Shaanxi 710199 (CN); XU, Lianjun, Base Xi'an, Shaanxi 710199 (CN); LEI, Wenying, Base Xi'an, Shaanxi 710199 (CN); JIA, Mengna, Base Xi'an, Shaanxi 710199 (CN)
(74) Representative: Rooney, John-Paul
(86) International application number: PCT/CN2020/121447
(87) International publication number: WO 2021/129068

(57) **Abstract**

A moon navigation system based on an earth GNSS and a moon navigation enhancement satellite, which belongs to the technical field of navigation. By adding a small number (one or more) of satellites at an earth-moon Lagrangian point or a lunar orbit to broadcast a navigation signal having a measurement function, the observation geometry of a lunar user is improved in combination with an earth GNSS; and by establishing a bidirectional time synchronization link between a ground deep space station or a GNSS navigation constellation and a moon navigation enhancement satellite and a bidirectional time synchronization link between the moon navigation enhancement satellite and the lunar user, the problem of a clock error and a radial distance error of a user receiver being unable to be decoupled is solved, and the real-time positioning precision of the lunar user is improved. In addition, a lunar surface radio beacon is added in a key area on the moon to broadcast a navigation signal having a measurement function, so as to enhance the regional navigation performance. On the basis of adding a small number of moon navigation resources, the real-time performance and the precision of navigation and positioning for a lunar user can be greatly improved, and low- and medium-speed bidirectional communication between the ground and the lunar user, and low- and medium-speed bidirectional communication between lunar users are provided.

## Description

The present application claims priority to Chinese Patent Application No. 201911368874.1, titled "MOON NAVIGATION SYSTEM BASED ON EARTH GNSS AND MOON NAVIGATION SATELLITE", filed on December 26, 2019 with the Chinese Patent Office, which is incorporated herein by reference in its entirety.

### FIELD

The present disclosure relates to a moon navigation system based on an earth GNSS and a moon navigation enhancement satellite, and belongs to the field of navigation technology.

### BACKGROUND

Tasks after moon exploration change from "focusing on science and engineering technology" to "focusing on scientific research and resource application", putting forward high requirements for autonomy, real-time and precision of navigation in application scenarios such as a lunar user circumnavigating the moon, landing on the moon, ascending from the moon, and moving and walking on the surface of the moon. However, the conventional navigation technology in moon exploration has great limitations in autonomy, real-time and positioning precision.

A GNSS system performs functions of space-based radio positioning, navigation and timing (PNT) by performing ranging and timing, thereby providing all-weather accurate three-dimensional positions, three-dimensional velocities and time information for ground users and low-orbit users. Although the GNSS system is designed for the ground users or the low-orbit users, real-time positioning and time synchronization for lunar users may be performed by receiving GNSS leakage signals. At present, domestic and foreign research institutions have carried out researches on application of the GNSS to moon autonomous navigation.

The difficulty of applying the GNSS to moon navigation is as follows. Since link attenuation is large due to the long space distance between the earth and the moon and the lunar users mainly receive GNSS sidelobe signals, the strengthes of the available GNSS signals are extremely low. GNSS satellites are mainly distributed in a zenith region of the lunar users, thus the spatial distribution is extremely poor for the observation geometry of the lunar users, resulting in a large positioning error.

### SUMMARY

A moon navigation system based on an earth GNSS and a moon navigation enhancement satellite is provided according to the present disclosure to overcome the shortcomings of the conventional technology, providing real-time positioning information for a lunar user in application scenarios, such as the lunar user circumnavigating the moon, landing the moon, ascending from the moon, and moving and walking on the surface of the moon, meeting navigation requirements of high autonomy, real-time and high precision for subsequent tasks of moon exploration, and providing medium and low speed two-way communication for multiple users in the lunar space.

According to the technical solutions of the present disclosure, a moon navigation system based on an earth GNSS and a moon navigation enhancement satellite is provided. The moon navigation system includes an earth GNSS navigation constellation, a ground deep space station, the moon navigation enhancement satellite, and a lunar user. The moon navigation enhancement satellite is a satellite node having a stable orbit and a stable position and capable of transmitting a measurement signal. The lunar user includes a lunar orbiter, a lunar lander, a lunar patrol vehicle, a lunar detector requiring determined position coordinates, or an astronaut terminal requiring determined position coordinates. The moon navigation enhancement satellite is loaded with an orbit determination load. The moon navigation enhancement satellite is configured to: receive a GNSS navigation signal from the earth GNSS navigation constellation; perform pseudo-code ranging to measure a pseudo range between the earth GNSS navigation constellation and the moon navigation enhancement satellite to perform initial positioning and timing; establish a two-way measurement and communication link with the ground deep space station or with the earth GNSS navigation constellation; perform two-way time comparison to measure a clock difference between the earth GNSS navigation constellation and the moon navigation enhancement satellite; and receive a GNSS ephemeris from the ground deep space station; perform, by using an orbit dynamics model of the moon navigation enhancement satellite based on the measured pseudo range, the measured clock difference and the GNSS ephemeris, orbit filtering to determine an orbit of the moon navigation enhancement satellite; generate and broadcast, by using a loaded navigation signal generation module, a lunar navigation signal for measurement; and modulate the lunar navigation signal with an ephemeris of the earth GNSS navigation constellation and an ephemeris of the moon navigation enhancement satellite for the lunar user to perform navigation and positioning calculation. The lunar user is loaded with a navigation terminal for receiving the GNSS navigation signal and the moon navigation signal to determine an absolute position.

Further, the absolute position is determined based on the earth GNSS navigation constellation and the moon navigation enhancement satellite by: passively receiving, by the lunar user using the navigation terminal, navigation signals from at least four satellites, in the earth GNSS navigation constellation and the moon navigation enhancement satellite, to obtain measurement values of pseudo ranges between the lunar user and the satellites; and calculating, by the lunar user, position coordinates of the lunar user to achieve four-satellite passive real-time positioning.

Further, the absolute position is determined based on the earth GNSS navigation constellation and the moon navigation enhancement satellite by: passively receiving, by the lunar user using the navigation terminal, the GNSS navigation signal of the earth GNSS constellation, and performing, by the lunar user, two-way measurement and communication with the moon navigation enhancement satellite to obtain measurement values of pseudo ranges between the lunar user and at least three satellites, in the earth GNSS navigation constellation and the moon navigation enhancement satellite; and performing time synchronization between the earth GNSS navigation constellation and the moon navigation enhancement satellite and performing time synchronization between the moon navigation enhancement satellite and the lunar user to calculate a clock difference of the lunar user to achieve real-time positioning of the lunar user.

Further, the moon navigation system based on an earth GNSS and a moon navigation enhancement satellite further includes a lunar radio beacon. The lunar radio beacon is arranged at a predetermined position on a surface of the moon, and is loaded with a lunar beacon navigation signal generation module. The lunar radio beacon is configured to generate and broadcast a lunar beacon navigation signal for measurement and perform time synchronization with the moon navigation enhancement satellite. The lunar user is configured to simultaneously receive navigation signals from at least three satellites, in the lunar surface beacon, the earth GNSS navigation constellation and the moon navigation enhancement satellite, to enhance navigation and positioning of the lunar user in a coverage region at the predetermined position on the moon.

Further, the predetermined position is located on the surface of the moon and meets a coverage requirement for a circumlunar demand arc and the lunar lander landing the moon, ascending from the moon and moving on the surface of the moon.

Further, the lunar radio beacon performs time synchronization with the moon navigation enhancement satellite by: establishing, by the lunar radio beacon, a two-way measurement and communication link with the moon navigation enhancement satellite or a two-way measurement and communication link with the lunar user to perform time synchronization between the moon navigation enhancement satellite and the lunar user and time synchronization between the lunar user and the lunar radio beacon.

Further, a two-way data transmission link is established between the moon navigation enhancement satellite and the ground deep space station or the earth GNSS navigation constellation, and a two-way data transmission link is established between the moon navigation enhancement satellite and the lunar user, to perform medium and low speed two-way data communication between a ground and the lunar user and medium and low speed two-way data communication between lunar users with the moon navigation enhancement satellite as a relay.

Further, the two-way data communication adopts time division multiple access in which a time slot polling period is less than a period of dispreading a direct sequence spread spectrum signal for measurement.

Further, the moon navigation enhancement satellite is provided with an atomic clock for performing time keeping on the moon navigation enhancement satellite in a time interval between performing two two-way time comparisons to maintain time synchronization between the moon navigation enhancement satellite and the earth GNSS navigation constellation.

Further, the moon navigation enhancement satellite is an orbiter travelling at an earth-moon Lagrangian point or in a lunar orbit or a lander landing on a surface of the moon.

Compared with the conventional technology, the present disclosure has the following advantages.

A moon navigation system based on an earth GNSS and a moon navigation enhancement satellite is provided according to the present disclosure. A few (one or more) satellites are added at an earth-moon Lagrangian point or in a lunar orbit to broadcast a navigation signal for measurement, improving observation geometry of a lunar user in cooperation with an earth GNSS. A two-way time synchronization link between a moon navigation enhancement satellite and a ground deep space station or a GNSS navigation constellation and a two-way time synchronization link between the moon navigation enhancement satellite and the lunar user are established, solving the problem that a clock difference and a radial distance error of a user receiver cannot be decoupled. A GNSS navigation message is forwarded to improve the accuracy of real-time positioning of the lunar user. A lunar radio beacon is arranged in a key region on the moon to broadcast a navigation signal for measurement, enhancing navigation performance in a region. With the moon navigation system according to the present disclosure, a small amount of moon navigation resources are added, so that the real-time performance and the accuracy of navigation and positioning of the lunar user can be greatly improved, providing high-precision real-time navigation services for the lunar user flying around the moon, fixed-point landing and returning and patrolling the surface of the moon, supporting mobility at any time in emergency, and providing medium and low speed two-way communication between the ground and the lunar user and medium and low speed two-way communication between lunar users. The specific advantages are described as follows.

(1) High-precision real-time positioning of the lunar user during the lunar user flying around the moon is realized, providing a strong support for orbital transfer and emergency response in emergency situations.

(2) High-precision navigation and positioning services can be provided for a lander during the lander landing on the moon, providing a support for a subsequent "fixed-point landing" mission on the moon.

(3) High-precision real-time positioning of an ascender and a lunar orbiter can be realized during the ascender ascending from the moon and the ascender and the lunar orbiter performing rapid autonomous rendezvous. In addition, the lunar navigation enhancement satellite has good visibility to the lunar orbiter due to the high orbital position of the lunar navigation enhancement satellite, providing ultra-long-range precise guidance for rendezvous and docking of the ascender and the lunar orbiter.

(4) Real-time and high-precision position information can be provided for a patrol vehicle and an astronaut terminal during the patrol vehicle and the astronaut terminal moving or walking on the moon, providing supports for tasks such as lunar in-situ scientific researches, resource explorations, and application verifications.

(5) Data transmission can be performed by using the two-way link between the moon navigation enhancement satellite and the ground deep space station or the GNSS navigation constellation and the two-way link between the moon navigation enhancement satellite and the lunar user, realizing medium and low speed two-way communication.

### BRIEF DESCRIPTION OF THE DRAWINGS

Figure 1 is a schematic diagram of a precise orbit determination solution based on a moon navigation enhancement satellite according to the present disclosure;
Figure 2 is a schematic diagram of a moon navigation system according to the present disclosure;
Figure 3 is a schematic diagram of a moon navigation enhancement solution according to the present disclosure; and
Figure 4 is a schematic diagram of a moon medium and low speed communication solution according to the present disclosure.

### DETAILED DESCRIPTION OF EMBODIMENTS

In order to better understand the above technical solutions, the technical solutions according to the present disclosure are described in detail below in conjunction with the drawings and the embodiments. It should be understood that the embodiments of the present disclosure and the features in the embodiments are used to describe the technical solutions of the present disclosure, rather than limit the technical solutions of the present disclosure. The embodiments of the present disclosure and the features in the embodiments may be in combination with each other as long as there is no conflict.

A moon navigation system based on an earth GNSS and a moon navigation enhancement satellite according to an embodiment of the present disclosure is described in detail below in conjunction with the drawings.

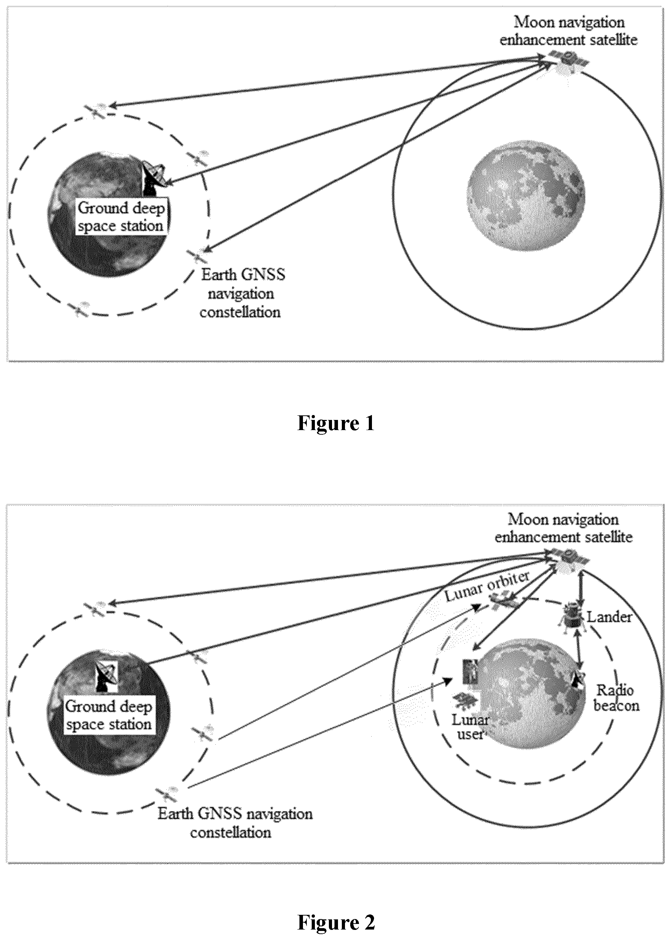

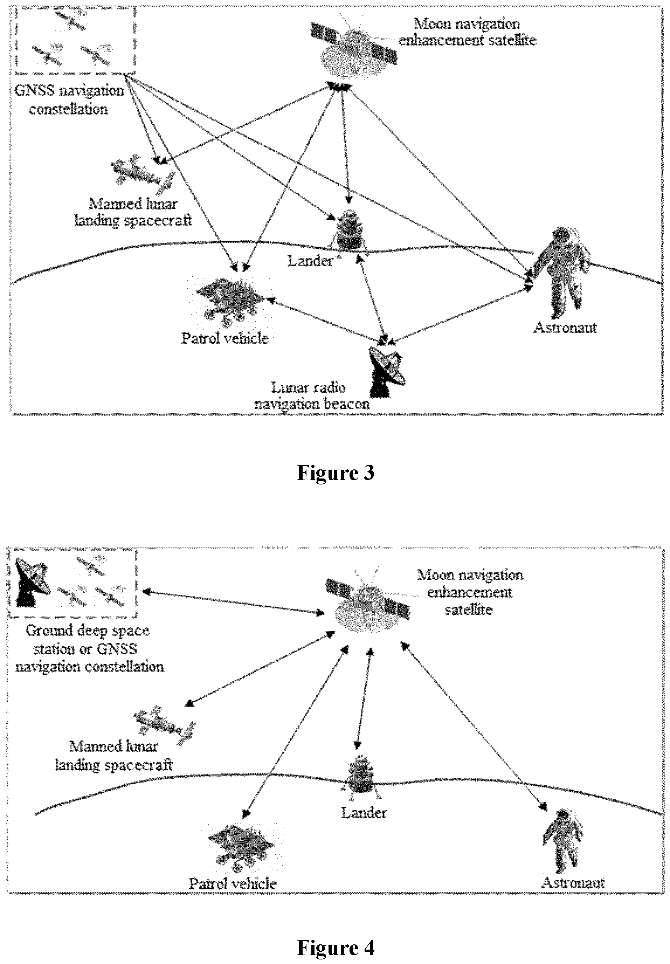

As shown in Figure 1 to Figure 4, a moon navigation system based on an earth GNSS and a moon navigation enhancement satellite adopts a joint real-time navigation and positioning technology solution of "earth GNSS + moon navigation enhancement satellite". A lunar user simultaneously receives a navigation signal broadcasted by the GNSS and a navigation signal broadcasted by the moon navigation enhancement satellite to perform real-time four-satellite passive positioning or three-satellite active positioning. In addition, a time synchronization link between the moon navigation enhancement satellite and the ground deep space station or the earth GNSS navigation constellation is established, and a time synchronization link between the moon navigation enhancement satellite and the lunar user is established. A lunar radio beacon is arranged in a key region to enhance navigation to further improve observation geometry of the user and improve the accuracy of real-time positioning. Through a two-way data transmission link between the lunar user and the moon navigation enhancement satellite, medium and low speed data communication between the lunar user and the ground and medium and low speed data communication between lunar users are performed with the moon navigation enhancement satellite as a relay.

In the technical solutions according to the embodiments of the present disclosure, the moon navigation system based on an earth GNSS and a moon navigation enhancement satellite includes the moon navigation enhancement satellite and a lunar user.

The moon navigation enhancement satellite includes a node, such as an orbiter travelling at an earth-moon Lagrangian point or in a specific lunar orbit or a lander landing on the surface of the moon, that has a stable orbit and a stable position and is capable of transmitting a measurement signal.

Further, the moon navigation enhancement satellite is arranged in a lunar orbit, is loaded with a precise orbit determination load, receives an earth GNSS navigation signal, and performs initial positioning and timing. In addition, the moon navigation enhancement satellite establishes a two-way measurement and communication link based on a ground deep space station or a GNSS navigation constellation, performs two-way high-precision measurement to decouple a distance and a clock difference, and performs short-term time keeping by using a miniaturized atomic clock in a time interval between two two-way comparison measurements. Time synchronization between the earth GNSS constellation and the moon navigation enhancement satellite is performed, solving the coupling between a positioning radial error and a clock error of the navigation satellite and improving the accuracy of an outputted pseudo range and a velocity observation. Based on an orbit dynamics model, orbit filtering is performed for a long time period (for example, 24 hours) to determine an orbit, improving the accuracy of orbit determination.

The lunar user includes a lunar orbiter, a lunar lander, a lunar patrol vehicle, a lunar detector requiring determined position coordinates, or an astronaut terminal requiring determined position coordinates.

Further, the lunar user is loaded with a navigation terminal for receiving a GNSS navigation signal and a moon navigation signal to determine an absolute position.

In an embodiment, the moon navigation enhancement satellite is loaded with a navigation load, broadcasts a navigation signal for measurement, and modulate an ephemeris of the earth GNSS and an ephemeris of the moon navigation enhancement satellite on the signal. The lunar user is loaded with an earth-moon real-time navigation terminal to simultaneously receive the navigation signal broadcasted by the earth GNSS and the navigation signal broadcasted by the moon navigation enhancement satellite.

Further, the lunar user is loaded with a high-sensitivity navigation receiver, and supports the following two positioning modes. In positioning mode (1), one-way measurement is performed, that is, the lunar user passively receives a signal from the earth GNSS and a signal from the moon navigation enhancement satellite to perform four-satellite passive real-time positioning. In positioning mode (2), two-way measurement is performed. The lunar user passively receives a navigation signal from the earth GNSS and performs active two-way measurement with the moon navigation enhancement satellite. Time synchronization between the earth GNSS navigation constellation and the moon navigation enhancement satellite and time synchronization between the moon navigation enhancement satellite and the lunar user are performed, thus the user directly calculates a clock difference. Real-time positioning can be performed with no less than three satellites, reducing the demand for the number of satellite observations, further improving observation PDOP, and improving positioning accuracy.

In an embodiment, a lunar radio beacon is arranged in a key navigation region of the moon. The beacon is provided with an antenna, a transceiver and a time-frequency generation unit for generating and broadcasting a radio beacon navigation signal, and performs time synchronization with the moon navigation enhancement satellite. It is required to arrange the beacon at a position covering the key region for a long time, so that the beacon cooperates with the earth GNSS and the moon navigation enhancement satellite to improve the accuracy of navigation and positioning of the key region of the moon.

Further, the time synchronization with the moon lunar navigation enhancement satellite is performed in two time synchronization manners. In time synchronization manner (1), a two-way measurement link with the moon navigation enhancement satellite is directly established. In time synchronization manner (2), a two-way measurement link with the lunar user is established to perform time synchronization between the moon navigation enhancement satellite, the lunar user and the lunar radio beacon. The lunar radio beacon broadcasts a navigation signal for measurement. The number of pseudo-satellites is increased. The earth GNSS, the moon navigation enhancement satellite and the lunar radio beacon cooperate to improve observation geometry of the user and further improve the accuracy of navigation and positioning in the key region.

With the two-way link between the moon navigation enhancement satellite and the ground deep space station or the GNSS navigation constellation and the two-way link between the moon navigation enhancement satellite and the lunar user where the two-way links have functions of measurement and low speed data communication, ultra-long-range and beyond-line-of-sight data communication between the earth and the lunar user and ultra-long-range and beyond-line-of-sight data communication between multiple lunar users are performed with the moon navigation enhancement satellite as a relay, supporting tasks such as spacecraft command and control and remote rendezvous and docking.

In an embodiment, the moon navigation enhancement satellite is provided with a wide-beam antenna to cover the surface of the moon and spaces adjacent to the moon. The lunar user is provided with a multi-beam agile scanning antenna. A two-way data link is established between the lunar user and the navigation enhancement satellite for performing two-way data communication between the ground and the lunar user and data communication between lunar users with the moon navigation enhancement satellite as a relay.

In an embodiment, time division multiple access is used to perform two-way measurement and communication between the moon navigation enhancement satellite and multiple users. In the time division multiple access, a chip-level time slot width is configured, fast polling and switching are performed between different users, and a polling period (ranging from 100ns to 10ms) between users is much less than a period of dispreading a navigation direct sequence spread spectrum signal. It is only required for the user to perform simple processing to realize continuous tracking and measurement, which may be equivalent to performing tracking and measurement on continuous navigation signals.

Apparently, those skilled in the art can make various variations and modifications to the present disclosure without departing from the spirit and the scope of the present disclosure. Thus, if these variations and modifications of the present disclosure fall within the scope of the claims of the present disclosure and equivalent technologies thereof, the present disclosure is intended to include these variations and modifications.

Contents not described in detail in the specification of the present disclosure belong to the technology known to those skilled in the art.

## Claims

1. A moon navigation system based on an earth GNSS and a moon navigation enhancement satellite, comprising an earth GNSS navigation constellation, a ground deep space station, the moon navigation enhancement satellite, and a lunar user, wherein
the moon navigation enhancement satellite is a satellite node having a stable orbit and a stable position and capable of transmitting a measurement signal;
the lunar user comprises a lunar orbiter, a lunar lander, a lunar patrol vehicle, a lunar detector requiring determined position coordinates, or an astronaut terminal requiring determined position coordinates;
the moon navigation enhancement satellite is loaded with an orbit determination load, and the moon navigation enhancement satellite is configured to:
receive a GNSS navigation signal from the earth GNSS navigation constellation;
perform pseudo-code ranging to measure a pseudo range between the earth GNSS navigation constellation and the moon navigation enhancement satellite to perform initial positioning and timing;
establish a two-way measurement and communication link with the ground deep space station or with the earth GNSS navigation constellation;
perform two-way time comparison to measure a clock difference between the earth GNSS navigation constellation and the moon navigation enhancement satellite;
receive a GNSS ephemeris from the ground deep space station;
perform, by using an orbit dynamics model of the moon navigation enhancement satellite based on the measured pseudo range, the measured clock difference and the GNSS ephemeris, orbit filtering to determine an orbit of the moon navigation enhancement satellite;
generate and broadcast, by using a loaded navigation signal generation module, a lunar navigation signal for measurement; and
modulate the lunar navigation signal with an ephemeris of the earth GNSS navigation constellation and an ephemeris of the moon navigation enhancement satellite for the lunar user to perform navigation and positioning calculation; and
the lunar user is loaded with a navigation terminal for receiving the GNSS navigation signal and the moon navigation signal to determine an absolute position.

2. The moon navigation system based on an earth GNSS and a moon navigation enhancement satellite according to claim 1, wherein the absolute position is determined based on the earth GNSS navigation constellation and the moon navigation enhancement satellite by:
passively receiving, by the lunar user using the navigation terminal, navigation signals from at least four satellites, in the earth GNSS navigation constellation and the moon navigation enhancement satellite, to obtain measurement values of pseudo ranges between the lunar user and the satellites; and
calculating, by the lunar user, position coordinates of the lunar user to achieve four-satellite passive real-time positioning.

3. The moon navigation system based on an earth GNSS and a moon navigation enhancement satellite according to claim 1, wherein the absolute position is determined based on the earth GNSS navigation constellation and the moon navigation enhancement satellite by:
passively receiving, by the lunar user using the navigation terminal, the GNSS navigation signal of the earth GNSS constellation, and performing, by the lunar user, two-way measurement and communication with the moon navigation enhancement satellite to obtain measurement values of pseudo ranges between the lunar user and at least three satellites, in the earth GNSS navigation constellation and the moon navigation enhancement satellite; and
performing time synchronization between the earth GNSS navigation constellation and the moon navigation enhancement satellite and performing time synchronization between the moon navigation enhancement satellite and the lunar user to calculate a clock difference of the lunar user to achieve real-time positioning of the lunar user.

4. The moon navigation system based on an earth GNSS and a moon navigation enhancement satellite according to claim 1, further comprising a lunar radio beacon, wherein
the lunar radio beacon is arranged at a predetermined position on a surface of the moon and is loaded with a lunar beacon navigation signal generation module;
the lunar radio beacon is configured to generate and broadcast a lunar beacon navigation signal for measurement, and perform time synchronization with the moon navigation enhancement satellite; and
the lunar user is configured to simultaneously receive navigation signals from at least three satellites, in the lunar beacon, the earth GNSS navigation constellation and the moon navigation enhancement satellite, to enhance navigation and positioning of the lunar user in a coverage region at the predetermined position on the moon.

5. The moon navigation system based on an earth GNSS and a moon navigation enhancement satellite according to claim 4, wherein the predetermined position is located on the surface of the moon and meets a coverage requirement for a circumlunar demand arc and the lunar lander landing the moon, ascending from the moon and moving on the surface of the moon.

6. The moon navigation system based on an earth GNSS and a moon navigation enhancement satellite according to claim 4, wherein the lunar radio beacon performs time synchronization with the moon navigation enhancement satellite by:
establishing, by the lunar radio beacon, a two-way measurement and communication link with the moon navigation enhancement satellite or a two-way measurement and communication link with the lunar user to perform time synchronization between the moon navigation enhancement satellite and the lunar user and time synchronization between the lunar user and the lunar radio beacon.

7. The moon navigation system based on an earth GNSS and a moon navigation enhancement satellite according to claim 1, wherein
a two-way data transmission link is established between the moon navigation enhancement satellite and the ground deep space station or the earth GNSS navigation constellation and a two-way data transmission link is established between the moon navigation enhancement satellite and the lunar user, to perform medium and low speed two-way data communication between a ground and the lunar user and medium and low speed two-way data communication between lunar users with the moon navigation enhancement satellite as a relay.

8. The moon navigation system based on an earth GNSS and a moon navigation enhancement satellite according to claim 7, wherein the two-way data communication adopts time division multiple access in which a time slot polling period is less than a period of dispreading a direct sequence spread spectrum signal for measurement.

9. The moon navigation system based on an earth GNSS and a moon navigation enhancement satellite according to claim 1, wherein the moon navigation enhancement satellite is provided with an atomic clock for performing time keeping on the moon navigation enhancement satellite in a time interval between two two-way time comparisons to maintain time synchronization between the moon navigation enhancement satellite and the earth GNS S navigation constellation.

10. The moon navigation system based on an earth GNSS and a moon navigation enhancement satellite according to claim 1, wherein the moon navigation enhancement satellite is an orbiter travelling at an earth-moon Lagrangian point or in a lunar orbit, or a lander landing on a surface of the moon.
